(19) Europäisches Patentamt
European Patent Office
Office européen des brevets

(11) **EP 1 776 537 B1**

(12) **EUROPÄISCHE PATENTSCHRIFT**

(45) Veröffentlichungstag und Bekanntmachung des Hinweises auf die Patenterteilung:
**03.03.2010  Patentblatt 2010/09**

(21) Anmeldenummer: **05788457.9**

(22) Anmeldetag: **05.07.2005**

(51) Int Cl.:
**F16H 59/46** (2006.01)

(86) Internationale Anmeldenummer:
**PCT/EP2005/007231**

(87) Internationale Veröffentlichungsnummer:
**WO 2006/018070 (23.02.2006 Gazette 2006/08)**

(54) **VERFAHREN ZUR ERMITTLUNG EINES ÜBERSETZUNGSVERHÄLTNISSES IM ANTRIEBSSTRANG EINES KRAFTFAHRZEUGES**

METHOD FOR DETERMINING A TRANSMISSION RATIO IN THE DRIVETRAIN OF A MOTOR VEHICLE

PROCEDE POUR DETERMINER UN RAPPORT DE MULTIPLICATION DANS L'ENSEMBLE TRANSMISSION D'UN VEHICULE AUTOMOBILE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.08.2004   DE 102004039272**

(43) Veröffentlichungstag der Anmeldung:
**25.04.2007   Patentblatt 2007/17**

(73) Patentinhaber: **ZF Friedrichshafen AG 88038 Friedrichshafen (DE)**

(72) Erfinder:
• **MÜLLER, Bernd 88046 Friedrichshafen (DE)**
• **GRÖNER, Wolfgang 88048 Friedrichshafen (DE)**

(56) Entgegenhaltungen:
| | |
|---|---|
| **DE-A1- 4 333 822** | **DE-A1- 10 149 526** |
| **DE-A1- 10 207 940** | **DE-A1- 19 726 743** |
| **DE-C1- 19 506 296** | **US-A- 4 439 833** |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Ermittlung eines Übersetzungsverhältnisses im Antriebsstrang eines Kraftfahrzeuges gemäß dem Oberbegriff des Patentanspruchs 1 und wie aus der DE 197 26 743 bekannt.

Es ist bekannt, dass in einem Kraftfahrzeugantriebsstrang einem Antriebsmotor eine Kupplung und ein Wechselgetriebe antriebstechnisch nachgeordnet sind. Das Wechselgetriebe hat unter anderem die Funktion, die Motordrehzahl und das Motordrehmoment zu wandeln. Durch diese Veränderungen stellen sich an den angetriebenen Rädern des Fahrzeuges Drehzahlen und Drehmomente ein, die den gewünschten Fahrgeschwindigkeiten bei ausreichend hohen Antriebsmomenten bzw. Zugkräften entsprechen.

Die Wandlung des Drehmomentes und der Drehzahl wird erzielt, indem im Wechselgetriebe unterschiedliche Übersetzungsverhältnisse eingestellt werden. Das jeweilige Übersetzungsverhältnis wird dadurch bestimmt, dass eine Drehzahl $n_m$ an der Abtriebswelle des Motors oder Antriebswelle des Getriebes mit der Drehzahl $n_{wg}$ an der Abtriebswelle des Wechselgetriebes miteinander verglichen werden. Das Übersetzungsverhältnis zwischen der Abtriebswelle des Motors oder Antriebswelle des Getriebes und der Abtriebswelle des Wechselgetriebes ist definiert durch die Gleichung $i_1 = n_{wg}/n_m$. Ist die Drehzahl $n_{wg}$ an der Abtriebswelle des Wechselgetriebes bekannt und sind keine weiteren, die Drehzahl beeinflussenden Komponenten im Antriebsstrang bis zum Antriebsrad vorhanden, bestimmt sich die Drehzahl des mindestens einen Fahrzeugantriebsrades aus der Drehzahl der Abtriebswelle des Wechselgetriebes.

Im Laufe der Nutzungsdauer eines Fahrzeugs können jedoch Situationen entstehen, in denen Komponenten, welche dem Wechselgetriebe nachgeschaltet sind, das tatsächliche Übersetzungsverhältnis beeinflussen. Dies geschieht zum Beispiel, wenn beim Aufbau oder beim Umbau des Kraftfahrzeuges eine Hinterachse mit einem Achsgetriebe eingebaut wird, welches ein Achsgetriebe mit einer anderen Übersetzung benutzt, als sie in der zuvor verwendeten Hinterachse zum Einsatz kam.

Eine andere Ursache für die Änderung des Übersetzungsverhältnisses im Antriebsstrang kann ein schaltbares Verteilergetriebe sein, dessen Schaltstufe geändert wurde. Ein Verteilergetriebe, welches zwischen Wechselgetriebe und Achsgetriebe eingesetzt wird, kann verwendet werden, um mehrere Fahrzeugachsen gleichzeitig anzutreiben. Eine weitere Aufgabe des Verteilergetriebes kann darin liegen, den Drehzahlausgleich zwischen den Achsgetrieben bei Fahrzeugen mit permanentem Allradantrieb zu erreichen oder den Drehzahlausgleich bei zu großen Schlupfunterschieden zwischen den Antriebsrädern zu sperren. Bei Geländefahrzeugen oder Nutzfahrzeugen wird das Verteilergetriebe auch dazu verwendet, den Übersetzungsbereich zu erweitern. Dabei kann es vorkommen, dass nicht genau bekannt ist, in welcher Größe das Übersetzungsverhältnis des Antriebsstranges beeinflusst wird.

Eine weitere Ursache dafür, dass in Komponenten des Antriebsstranges, welche dem Wechselgetriebe nachgeschaltet sind, ein Übersetzungsverhältnis geändert wird, kann auch durch die Antriebsräder bewirkt werden. Wird ein Radwechsel vorgenommen und werden dabei Räder verwendet, welche einen anderen Durchmesser aufweisen als die zuvor verwendeten Räder, entsteht eine im Vergleich zu den vorher verwendeten Rädern geänderte Abrolllänge, so dass eine andere Fahrzeuggeschwindigkeit entsteht. Eine Durchmesseränderung kann auch durch die Absenkung des Luftdruckes während der Fahrt, zum Beispiel zur Traktionsverbesserung, vorkommen. Während der Nutzungsdauer eines Fahrzeugs kommt es auch zu Reifenverschleiß, bei dem sich im Laufe der Zeit der Raddurchmesser vermindert. Diese Einflüsse können dazu führen, dass das Übersetzungsverhältnis teilweise bzw. gar nicht bekannt ist, so dass für Fahrstrategie, Getriebesteuerung und Kupplungssteuerung keine oder nur fehlerhafte Signalgrößen vorhanden sind.

Vor diesem Hintergrund liegt der Erfindung die Aufgabe zugrunde, ein Verfahren zu bestimmen, mit dem Fahrstrategie, Kupplungssteuerung und Getriebesteuerung während der gesamten Lebensdauer eines Fahrzeuges optimal und mit wenig Aufwand eingestellt werden können.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass die Ermittlung einzelner Übersetzungen von Komponenten im Antriebsstrang, welche dem Wechselgetriebe bis zum angetriebenen Rad nachgeschaltet sind, nicht mit vertretbarem Aufwand bestimmbar ist. Daher wird gemäß der Erfindung dazu übergegangen, eine Gesamtübersetzung der dem Wechselgetriebe nachgeschalteten Komponenten zu bestimmen.

Demnach geht die Erfindung aus von einem Verfahren zur Ermittlung eines Übersetzungsverhältnisses im Antriebsstrang eines Kraftfahrzeugs mit einem Motor, einer nachgeschalteten Kupplung und einem daran nachgeschalteten Wechselgetriebe, wobei zwischen Motor und Wechselgetriebe eine Übersetzung durch die momentane Drehzahl der Abtriebswelle des Motors und der momentanen Drehzahl der Abtriebswelle des Wechselgetriebes bestimmt ist.

Zudem ist vorgesehen, dass das Verfahren die weiteren Schritte aufweist: Bestimmen eines Betrages der momentanen Geschwindigkeit des Kraftfahrzeuges und Verarbeiten des Betrages der momentanen Drehzahl der Abtriebswelle des Wechselgetriebes und des Betrages der momentanen Geschwindigkeit des Kraftfahrzeuges mittels einer Recheneinheit, so dass das Übersetzungsverhältnis von dem Wechselgetriebe nachgeschalteten Fahrzeugkomponenten des Antriebsstranges bestimmt wird.

Des weiteren ist vorgesehen, dass der Betrag der momentanen Drehzahl der Abtriebswelle des Wechselgetriebes und/oder der Betrag der momentanen Fahrzeuggeschwindigkeit bei jeweils unterschiedlichen Taktraten erfasst wird. Dies ist vorteilhaft, da somit Sensoren und Messwertaufnehmer verwendbar sind, welche zu unterschiedlichen Zeitpunkten einen jeweils aktualisierten Messwert zur Verfügung stellen.

Außerdem ist vorgesehen, daß die Recheneinheit die Verarbeitung der genannten Beträge nur durchführt, wenn eine Änderung desjenigen Betrages vorliegt, welcher mit der niedrigsten Taktrate erfasst wird. Dies ist vorteilhaft, da somit in die Ermittlung des Übersetzungsverhältnisses nur Messwerte eingehen, welche zusammen jeweils den aktuellsten Wert darstellen. Somit lässt sich vermeiden, dass für die Berechnung des Übersetzungsverhältnisses Messwerte zum Einsatz kommen, welche zu unterschiedlichen Zeitpunkten und damit bei unterschiedlichen Ereignissen erfasst worden sind.

Zudem kann vorgesehen sein, dass die Recheneinheit die Verarbeitung der Beträge nur durchführt, wenn der Betrag einer Beschleunigung der momentanen Drehzahl der Abtriebswelle einen bestimmten Wert nicht überschreitet. Dies ist vorteilhaft, da somit mechanische Verformungen, die im Antriebsstrang beim Anfahren auftreten (sogenannte Auizieheffekte), nur noch als unwesentliche Störgröße bei der Ermittlung des Übersetzungsverhältnisses wirken.

Gemäß einer anderen Variante der Erfindung kann vorgesehen sein, dass die Recheneinheit die Verarbeitung der erwähnten Beträge so oft wiederholt, bis das ermittelte Übersetzungsverhältnis einen definierten Toleranzbetrag nicht überschreitet. Dies ist vorteilhaft, da somit nur ein ermitteltes Übersetzungsverhältnis, welches nur noch mit einer geringen Messunsicherheit verbunden ist, als Signalgröße für die Getriebesteuerung, Kupplungssteuerung und für Fahrstrategie zum Einsatz kommt.

Schließlich kann bevorzugt vorgesehen sein, dass die Recheneinheit einen Ersatzwert anstelle eines berechneten Wertes bestimmt. Dies ist vorteilhaft, da zum Beispiel für den Fall, in dem ein ermitteltes Übersetzungsverhältnis einen minimalen Übersetzungsverhältnisbetrag unterschreitet, ein solcher Ersatzwert zum Einsatz kommt und die Getriebesteuerung und Kupplungssteuerung und die Fahrstrategie nicht auf einem Wert basieren, der technisch offensichtlich nicht sinnvoll ist.

Die Erfindung lässt sich anhand eines Ausführungsbeispiels und einer der Beschreibung beigefügten Zeichnung erläutern. In dieser zeigt

Fig. 1   eine schematische Draufsicht auf einen Kraftfahrzeugantriebs- strang,
Fig. 2   eine Darstellung zur Erläuterung der Fehlerrechnung bei der Ermittlung des Übersetzungsverhältnisses gemäß einer Ausfüh- rungsform der Erfindung,
Fig. 3   eine schematische Darstellung zur Erläuterung der Ermittlung des Übersetzungsverhältnisses gemäß einer anderen Ausfüh- rungsform der Erfindung, und
Fig. 4   eine schematische Darstellung zur Erläuterung der Ermittlung des Übersetzungsverhältnisses gemäß einer weiteren Ausfüh- rungsform der Erfindung.

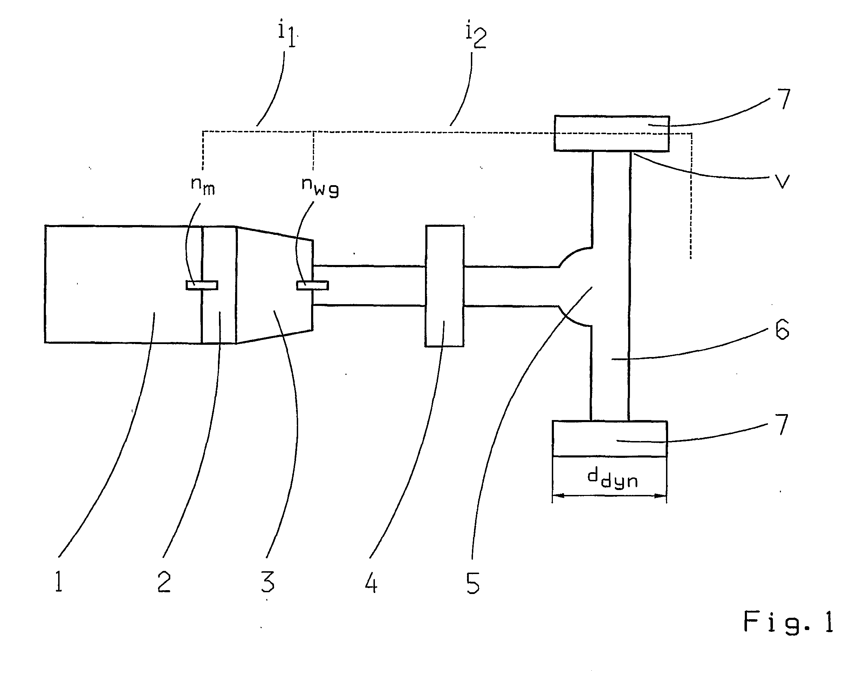

Wie aus Fig. 1 ersichtlich ist, weist der Antriebsstrang eines Kraftfahrzeugs einen Motor 1, eine antriebstechnisch nachgeordnete Kupplung 2 und ein nachgeschaltetes Wechselgetriebe 3 auf. Der Motor 1 weist an seiner Abtriebswelle eine Drehzahl $n_m$ auf, welche bei nicht geöffneter Kupplung 2 von dieser zum Wechselgetriebe 3 übertragen wird. Dort findet eine Drehmomentwandlung und eine Drehzahlwandlung statt, so dass die Abtriebswelle des Wechselgetriebes 3 mit einer Drehzahl $n_{wg}$ rotiert.

Die Übersetzung zwischen Motor und Wechselgetriebe errechnet sich bekanntermaßen durch die Gleichung $i_1 = n_m / n_{wg}$. An der Abtriebswelle des Wechselgetriebes 3 wird die Drehzahl vom Antriebsstrang zum eventuell vorhandenen Verteilergetriebe 4 und von dort zum Achsgetriebe 5 weitergeleitet. Dort findet eine Umleitung des Kraftflusses um 90° statt, so dass die quer zur Längsachse des Fahrzeugs angeordneten Antriebswellen 6 angetrieben werden. Am Ende der Antriebswellen 6 sind die Räder 7 des Fahrzeugs angeordnet.

Gemäß einer Ausführungsform der Erfindung wird die momentane Fahrzeuggeschwindigkeit am Rad 7 gemessen, so dass mit der Drehzahl $n_{wg}$ ein relatives Übersetzungsverhältnis nach folgender Formel bestimmt werden kann:

$$\frac{i_2}{d_{dyn}} = \pi \frac{n_{wg}}{v} \qquad\qquad (1)$$

Dabei ist $i_2$ das Übersetzungsverhältnis von der Abtriebswelle des Wechselgetriebes 3 bis zum angetriebenen Rad 7, $d_{dyn}$ = der dynamische Raddurchmesser eines Rades 7, $n_{wg}$ die Drehzahl an der Abtriebswelle des Wechselgetriebes und $v$ die Geschwindigkeit des Rades 7. Mit $i_2$ ist die Gesamtübersetzung bezeichnet, welche sämtliche Einzelübersetzungen der zwischen dem Wechselgetriebe 3 und dem Rad 7 vorhandenen Komponenten beinhaltet. In Fig. 1 ist dieser Antriebsstrangbereich mit einer gestrichelten Linie dargestellt. Ist das mit Formel (1) ermittelte relative Übersetzungsverhältnis bekannt, lassen sich damit folgende Probleme lösen:

a) Ausfall eines Geschwindigkeitssensors oder Ausfall eines Drehzahlsensors im Antriebsstrang: Da das Verhältnis $i_2/d_{dyn}$ für einen überschaubaren Zeitraum konstant ist, kann ein eventuell plötzlich fehlender Wert eines Geschwindigkeitssensors bzw. eines Drehzahlsensors berechnet werden.

b) Unbekannte Übersetzungsstufe eines Verteilergetriebes: Ist der dynamische Raddurchmesser $d_{dyn}$ bekannt, lässt sich bei erfasster Fahrzeuggeschwindigkeit $v$ und erfasster Drehzahl $n_{wg}$ des Wechselgetriebes 3 das Übersetzungsverhältnis $i_2$ bestimmen. Ist zudem das Übersetzungsverhältnis des Achsgetriebes 5 bekannt, ergibt sich daraus die Übersetzungsstufe eines Verteilergetriebes 4.

c) Unbekannter dynamischer Raddurchmesser: Sind das Übersetzungsverhältnis $i_2$, die Drehzahl $n_{wg}$ an der Abtriebswelle des Wechselgetriebes 3 und die Fahrzeuggeschwindigkeit $v$ bekannt, so lässt sich der dynamische Raddurchmesser bestimmen. Wenn während der Nutzungsdauer eines Fahrzeugs ein Radwechsel stattfindet, die Reifen verschleißen oder sich der Luftdruck absenkt, ändert sich der dynamische Durchmesser eines Rades, welcher gemäß Formel (1) ermittelt werden kann.

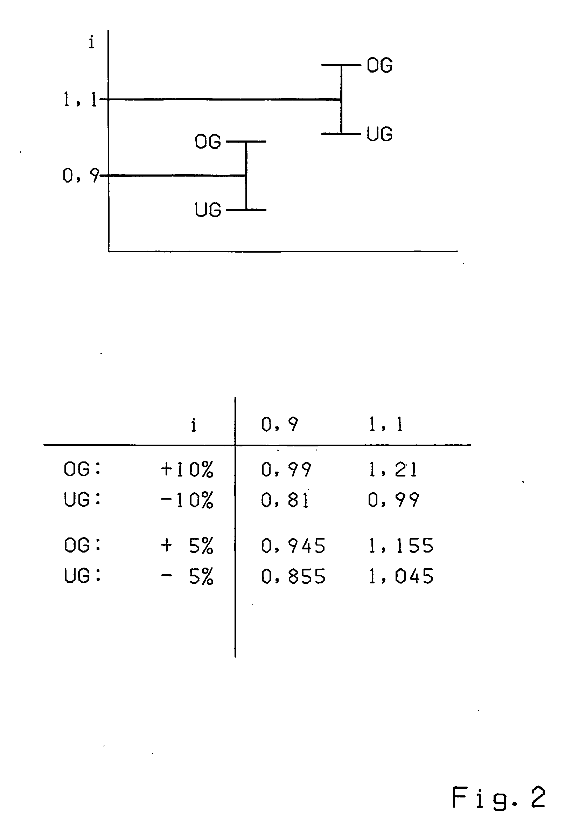

Bei der Bestimmung eines Übersetzungsverhältnisses $i_2$ ist zu beachten, dass die Messunsicherheiten bzw. Fehler beim Erfassen einer Messgröße nicht so groß werden, dass ein Irrtum über die Übersetzungsstufe möglich wird. Folgendes Beispiel mag dies in Verbindung mit Fig. 2 verdeutlichen:

Weist ein schaltbares Verteilergetriebe eine Schaltstufe mit der ersten Übersetzung 1:0,9 und eine Schaltstufe mit der zweiten Übersetzung 1:1,1 1 auf, so sind diese Übersetzungen deutlich voneinander unterscheidbar, wenn die Messgrößen ohne Fehler gemessen werden. In der Praxis ist jedes Messsignal jedoch mit einer Messunsicherheit verbunden.

Es sei angenommen, dass das Übersetzungsverhältnis mit einer Unsicherheit von $\pm$ 10 % bekannt ist. Dann ergibt dies einen Fehlerbalken mit einer unteren Grenze UG und einer oberen Grenze OG mit den Beträgen, wie sie in der Tabelle in Fig. 2 dargestellt sind. Bei der ersten Übersetzung von 1:0,9 führt eine Unsicherheit von +10 % zu einer oberen Grenze OG von 0,99, wobei die Unsicherheit von -10 % zu einer unteren Grenze UG = 0,81 führt. Bei der nächsten Schaltstufe mit der zweiten Übersetzung 1:1,1 führt die Unsicherheit von $\pm$10 % zu einer oberen Grenze OG von 1,21 und zu einer unteren Grenze UG von 0,99. Dadurch wird ersichtlich, dass die obere Grenze OG bei der ersten Übersetzung von 1:0,9 gleich der unteren Grenze UG bei der zweiten Übersetzung von 1:1,1 ist. Eine Unsicherheit von $\pm$10 % führt somit dazu, dass nicht klar entschieden werden kann, ob bei dem schaltbaren Verteilergetriebe eine Übersetzung von 1:0,9 oder 1:1,1 vorliegt. Eine solche Situation kann vermieden werden, wenn die Unsicherheit bei der Ermittlung des Übersetzungsverhältnisses deutlich gesenkt wird und zum Beispiel nur bei $\pm$5 % liegt.
Die Unsicherheiten bei der Bestimmung eines Übersetzungsverhältnisses können durch systematische Fehler bedingt sein. Dazu gehören unter anderem ein Schlupf an einem Antriebsrad, unterschiedliche Taktraten bei der Ermittlung einer Fahrzeuggeschwindigkeit bzw. Drehzahl der Abtriebswelle des Wechselgetriebes 3 sowie ein Aufzieheffekt der Hinterachse beim Anfahren des Kraftfahrzeugs. Die Unsicherheiten bei der Ermittlung des Übersetzungsverhältnisses lassen sich minimieren, wenn zum Beispiel die unterschiedliche Taktrate bei der Ermittlung der Signale berücksichtigt wird.

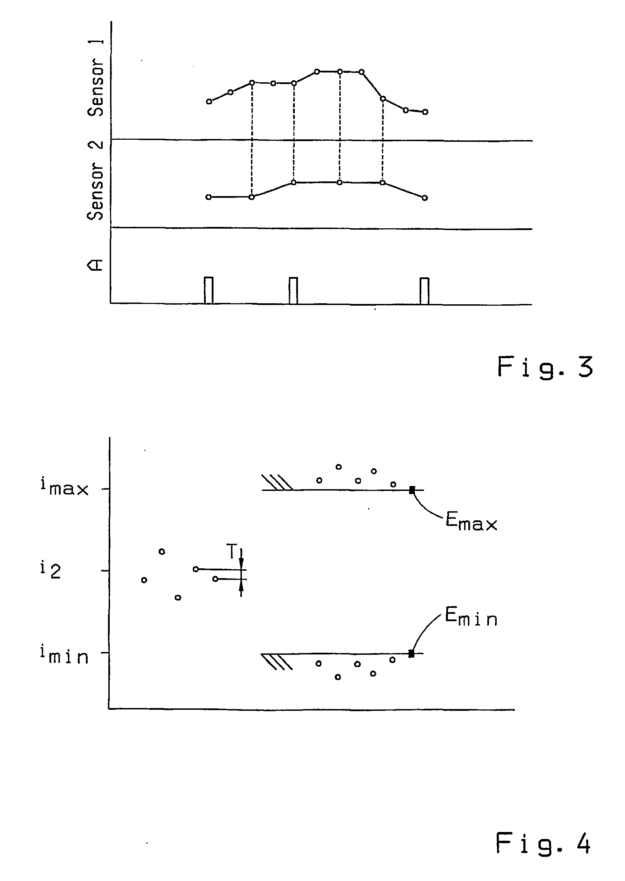

In Fig. 3 sind als Beispiel Signalverläufe dargestellt, welche zu einem Sensor 1 bzw. zu einem Sensor 2 gehören. Beim Sensor 1 werden die Signale mit einer relativ hohen Taktrate erfasst, während beim Sensor 2 eine niedrigere Taktrate genutzt wird. In dem dargestellten Beispiel weist der Sensor 1 eine doppelt so hohe Taktrate wie der Sensor 2 auf.
Bezüglich der Ermittlung des Übersetzungsverhältnisses $i_2$ mag zum Beispiel der Sensor 1 für den Drehzahlsensor am Wechselgetriebe 3 und der Sensor 2 für den Geschwindigkeitssensor am Rad 7 stehen. Um zu entscheiden, welches Signal bei der Berechnung des Übersetzungsverhältnisses $i_2$ zum Einsatz kommt, kann gemäß der Erfindung derart vorgegangen werden, dass eine Berechnung des Übersetzungsverhältnisses $i_2$ nur erfolgt, wenn eine Signaländerung des Sensors 2 mit der niedrigeren Taktrate vorliegt (siehe "A" in Figur 3 mit den dort eingezeichneten Ereignisbalken). Dies führt dazu, dass ein Übersetzungsverhältnis nur dann berechnet wird, wenn von beiden Sensoren 1 und 2 ein neu erfasstes Signal vorliegt. Ändert sich ein Ereignis und wird dies von einem Sensor eher erkannt als von einem zweiten Sensor, so wird ein Übersetzungsverhältnis ermittelt, welches mit einem relativ hohen systematischen Fehler behaftet ist.
Beim Anfahren kann es zu einer mechanischen Verformung und zu einem Verdrehen der gesamten Radaufhängung kommen, dem sogenannten "Aufzieheffekt". Die Ermittlung des Übersetzungsverhältnisses gemäß der Erfindung kann so lange ausgesetzt werden, bis der Aufzieheffekt eine nur noch vernachlässigbare Verfälschung des Messsignals mit sich bringt. Dies lässt sich zum Beispiel dadurch erreichen, dass der Betrag einer Änderung der Beschleunigung der momentanen Drehzahl der Abtriebswelle eines Wechselgetriebes d $n_{wg}$ / d$t^3$ einen bestimmten Wert nicht überschreitet.

Eine weitere Möglichkeit, einen systematischen Fehler bei der Ermittlung des Übersetzungsverhältnisses $i_2$ zu verringern, ist im Zusammenhang mit Fig. 4 ersichtlich. Demnach wird eine Berechnung gemäß Formel (1) so oft wiederholt, bis das Ergebnis einer Berechnung im Vergleich zu einem Ergebnis der vorhergehenden Berechnung einen definierten Toleranzbetrag T nicht überschreitet. Eine weitere Maßnahme liegt darin, dass beim Unterschreiten eines minimalen Übersetzungsverhältnisses statt der so ermittelten Beträge ein Ersatzwert $E_{min}$ verwendet wird. Dies gilt genauso beim Überschreiten eines maximal möglichen Übersetzungsverhältnisses. In diesem Fall wird ein Ersatzwert $E_{max}$ gewählt, siehe Fig. 4.

Werden diese Maßnahmen berücksichtigt, lassen sich die systematischen Fehler bei der Ermittlung des Übersetzungsverhältnisses reduzieren.

<u>Bezugszeichen</u>

1    Motor
2    Kupplung
3    Wechselgetriebe
4    Verteilergetriebe
5    Achsgetriebe
6    Hinterachse
7    Hinterrad

$i_1$    Übersetzung von Motor zu Wechselgetriebe
$i_2$    Übersetzung von Wechselgetriebe zu angetriebenem Rad
$n_m$    Drehzahl Motor
$n_{wg}$    Drehzahl Wechselgetriebe
$v$    kalibrierte Fahrzeuggeschwindigkeit
$d_{dyn}$    dynamischer Raddurchmesser
$E_{min}$    minimaler Ersatzwert
$E_{max}$    maximaler Ersatzwert
T    Toleranzbetrag
A    Rechenereignis

**Patentansprüche**

1.    Verfahren zur Ermittlung eines Übersetzungsverhältnisses im Antriebsstrang eines Kraftfahrzeugs mit einem Motor, einer nachgeordneten Kupplung und einem daran anschließenden Wechselgetriebe, wobei eine Übersetzung zwischen dem Motor und dem Wechselgetriebe bestimmt ist durch die Drehzahl der Abtriebswelle des Motors und die Drehzahl der Abtriebswelle des Wechseigetriebes, und wobei das Verfahren die weiteren Schritte aufweist::

    - Bestimmen eines Betrages der momentanen Geschwindigkeit des Kraftfahrzeuges und
    - Verarbeiten des Betrages der momentanen Drehzahl der Abtriebswelle des Wechselgetriebes und des Betrages der momentanen Geschwindigkeit des Kraftfahrzeuges mittels einer Recheneinheit,

    so dass das übersetzungsverhältnis der dem Wechselgetriebe nachgeschalteten Fahrzeugkomponenten des Antriebsstranges bestimmt wird, **dadurch gekennzeichnet, dass** der Betrag der momentanen Drehzahl der Abtriebswelle des Wechselgetriebes und/oder der Betrag der momentanen Fahrzeuggeschwindigkeit bei jeweils unterschiedlichen Taktraten erfasst wird und die Recheneinheit die Verarbeitung der Beträge nur durchführt, wenn eine Änderung des Betrages vorliegt, welcher mit der niedrigsten Taktrate erfasst wird.

2.    Verfahren nach Anspruch 1, **dadurch gekennzeichnet, dass** die Recheneinheit die Verarbeitung der Beträge nur durchführt, wenn der Betrag einer Beschleunigung der momentanen Drehzahl der Abtriebswelle einen bestimmten Wert nicht überschreitet.

3.    Verfahren nach Anspruch 1 oder 2, **dadurch gekennzeichnet, dass** die Recheneinheit die Verarbeitung der Beträge so oft wiederholt, bis das ermittelte Übersetzungsverhältnis einen definierten Toleranzbetrag nicht überschreitet.

4. Verfahren nach einem der Ansprüche 1 bis 3, **dadurch gekennzeichnet, dass** das Verfahren nur durchgeführt wird, wenn die momentane Fahrzeuggeschwindigkeit einen Mindestbetrag überschreitet.

5. Verfahren nach einem der vorherigen Ansprüche, **dadurch gekennzeichnet, dass** die Recheneinheit einen Ersatzwert anstelle eines berechneten Wertes bestimmt.

**Claims**

1. Method for determining a transmission ratio in the drivetrain of a motor vehicle having an engine, a downstream clutch and a speed-change gearbox following thereupon, a transmission ratio being defined between the engine and the speed-change gearbox by the speed of the output shaft of the engine and the speed of the output shaft of the speed-change gearbox, and the method having the following steps:

   - determining an absolute value of the instantaneous speed of the motor vehicle, and
   - processing the absolute value of the instantaneous speed of the output shaft of the speed-change gearbox and the absolute value of the instantaneous speed of the motor vehicle by means of an arithmetic unit,

   such that the transmission ratio of the vehicle components of the drivetrain which are connected downstream of the speed-change gearbox is determined, **characterized in that** the absolute value of the instantaneous speed of the output shaft of the speed-change gearbox and/or the absolute value of the instantaneous vehicle speed are/is detected at respectively different clock-pulse rates, and the arithmetic unit carries out the processing of the absolute values only when there is a change in the absolute value which is detected at the lowest clock-pulse rate.

2. Method according to Claim 1, **characterized in that** the arithmetic unit carries out the processing of the absolute values only when the absolute value of an acceleration of the instantaneous speed of the output shaft does not exceed a specific value.

3. Method according to Claim 1 or 2, **characterized in that** the arithmetic unit repeats the processing of the absolute values until the determined transmission ratio does not exceed a defined absolute tolerance value.

4. Method according to one of Claims 1 to 3, **characterized in that** the method is carried out only when the instantaneous vehicle speed exceeds a minimum absolute value.

5. Method according to one of the preceding claims, **characterized in that** the arithmetic unit determines a substitute value instead of a calculated value.

**Revendications**

1. Procédé pour déterminer un rapport de multiplication dans la transmission d'un véhicule automobile comprenant un moteur, un embrayage monté en aval et une boîte de vitesses s'y raccordant, une multiplication entre le moteur et la boîte de vitesses étant déterminée par le régime de l'arbre de sortie du moteur et le régime de l'arbre de sortie de la boîte de vitesses, et le procédé présentant les étapes suivantes :

   - détermination d'une valeur de la vitesse instantanée du véhicule automobile et
   - traitement de la valeur du régime instantané de l'arbre de sortie de la boîte de vitesses et de la valeur de la vitesse instantanée du véhicule automobile au moyen d'un ordinateur,

   de sorte que le rapport de multiplication des composants de la transmission du véhicule montés en aval de la boîte de vitesses soit déterminé, **caractérisé en ce que** la valeur du régime instantané de l'arbre de sortie de la boîte de vitesses et/ou la valeur de la vitesse instantanée du véhicule est détectée à chaque fois pour des taux d'impulsions de synchronisation différents et l'ordinateur n'effectue le traitement des valeurs que si la valeur détectée comme ayant le plus faible taux d'impulsion de synchronisation est modifiée.

2. Procédé selon la revendication 1, **caractérisé en ce que** l'ordinateur n'effectue le traitement des valeurs que si la valeur d'une accélération du régime instantané de l'arbre de sortie ne dépasse pas une valeur déterminée.

3. Procédé selon la revendication 1 ou 2, **caractérisé en ce que** l'ordinateur répète le traitement des valeurs tant que le rapport de multiplication déterminé ne dépasse pas une valeur de tolérance définie.

4. Procédé selon l'une quelconque des revendications 1 à 3, **caractérisé en ce que** le procédé n'est effectué que si la vitesse instantanée du véhicule dépasse une valeur minimale.

5. Procédé selon l'une quelconque des revendications précédentes, **caractérisé en ce que** l'ordinateur définit une valeur de remplacement au lieu d'une valeur calculée.

Fig. 1

|         | i      | 0,9    | 1,1    |
|---------|--------|--------|--------|
| OG:     | +10%   | 0,99   | 1,21   |
| UG:     | −10%   | 0,81   | 0,99   |
| OG:     | + 5%   | 0,945  | 1,155  |
| UG:     | − 5%   | 0,855  | 1,045  |

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19726743